**Europäisches Patentamt**

**European Patent Office**

**Office européen des brevets**

(11) Veröffentlichungsnummer: **0 426 977 A2**

# EUROPÄISCHE PATENTANMELDUNG

(21) Anmeldenummer: **90117718.8**

(22) Anmeldetag: **14.09.90**

(51) Int. Cl.⁵: **B23B 3/10, B23B 3/20**

(30) Priorität: **09.11.89 DE 3937330**

(43) Veröffentlichungstag der Anmeldung:
**15.05.91 Patentblatt 91/20**

(84) Benannte Vertragsstaaten:
**AT FR GB IT**

(71) Anmelder: **Gildemeister AG**
**Morsestrasse 1**
**W-4800 Bielefeld 11(DE)**

(72) Erfinder: **Schlie, Frithjof**
**Böckerstrasse 8**
**W-3000 Hannover 51(DE)**

(54) **Drehmaschine mit vertikaler Werkstückspindel.**

(57) Eine Drehmaschine mit vertikaler Werkstück-spindel (22) besitzt einen Maschinenständer (1) etwa quadratischen Querschnitts und mindestens zwei Werkzeugkreuzschlitten (3, 9 bzw. 4, 10) mit Füh-rungsbahnen (2, 7, 8) derart, daß die Werkzeuge sich in senkrecht zueinander stehenden Ebenen be- wegen. Den Werkzeugkreuzschlitten (3, 9, 4, 10) können bis zu vier Werkstückspindeln (22) zugeord-net werden, die quer zu den Vorschubrichtungen eines der Kreuzschlitten (3, 9) auf eigenen Füh-rungsbahnen (24) verschieblich sind.

Fig. 1

## DREHMASCHINE MIT VERTIKALER WERKSTÜCKSPINDEL

Die Erfindung betrifft eine Drehmaschine mit vertikal angeordneter Werkstückspindel zur drehbaren Halterung eines zu bearbeitenden Werkstücks, mit einem vertikal sich erstreckenden Maschinenständer etwa quadratischen Querschnitts und mit an mindestens zwei benachbarten Vertikalflächen des Maschinenständers angeordneten, vertikalen Längsführungen für mindestens zwei Längsschlitten, die ihrerseits horizontale Querführungen für Planschlitten tragen, wobei der eine Schlitten vorzugsweise rotierend angetriebene, radiale Werkzeuge trägt.

Eine derartige Maschine ist aus einem Prospekt der Fa. Pittler GmbH, Langen mit der Bezeichnung "pv 315 - CNC-Vertikal-Drehmaschinensystem für Futter- und Wellenteile" und dem Druckzeichen 717-89092 d BD bekannt. Auf Seite 4 des Prospekts sind zwei Prinzipskizzen vertikaler Drehmaschinen in der Draufsicht gezeigt, die Maschinenständer mit quadratischem Querschnitt und Führungsbahnen für Kreuzschlitten erkennen lassen. Die Planschlitten tragen je einen Werkzeugrevolver, wobei der eine ein Trommelrevolver für Außendreh- und Innenbearbeitungswerkzeuge und der andere ein Sternrevolver für angetriebene Werkzeuge ist.

Die Werkstückspindelachse liegt im Schnittpunkt der verlängerten Rotationsachse der Werkzeuge des Sternrevolvers mit der Parallelen zur Planvorschubrichtung durch die Schaltachse des Trommelrevolvers. Die Werkzeuge beider Werkzeugträger rücken um so weiter auseindander, je kleiner der Winkel ist, den ihre Planführungsbahnen zueinander bilden, und die Krafteinleitung in die Führungsbahnen und die Hebelarme zum Kraftangriffspunkt werden ungünstiger. Deshalb ist beim Stand der Technik die Planführung des einen Werkzeugträgers zur Planführung des anderen um einen Winkel geneigt, der größer als 90° ist. Damit werden jedoch die Bearbeitungsmöglichkeiten eingeschränkt. Es läßt sich keine weitere Vorschubbewegung zwischen Werkzeug und Werkstück realisieren. Der unsymmetrische Aufbau erlaubt es auch nicht, demselben Maschinenständer eine weitere Werkstückspindel zuzuordnen.

Der Erfindung liegt die Aufgabe zugrunde, die Bearbeitungsmöglichkeiten zu verbessern und die Variantenvielfalt der Maschinenkonfiguration unter Verwendung gleicher Baugruppen zu erhöhen.

Die Aufgabe wird durch die Merkmale des Anspruchs 1 gelöst.

Die rechtwinklige Anordnung der Querführungsbahnen ermöglicht die Verschiebung des Werkstücks quer zum Werkzeugträger mit radial gerichteten Werkzeugen, so daß ein Werkstück dreiachsig mit rotierend angetriebenen Werkzeugen bearbeitet werden kann. Die gleiche Vorschubbewegung dient jedoch auch dazu, mit dem Werkstück dicht an den zweiten Werkzeugträger heranzufahren, so daß sich aus der rechtwinkligen Anordnung der Führungsbahnen keine Nachteile für die Krafteinleitung in die Führungsbahnen und die Hebelarme ergeben.

Die Bewegung der Werkstückspindel erlaubt es, das Werkstück an den Werkzeugträger mit den Innenbearbeitungswerkzeugen so weit heranzufahren, daß selbst beim Bohren im Werkstückzentrum der Planschlitten nicht über die planschlittenführungen hinausragt, sondern in seiner ganzen Länge auf den Führungsbahnen ruht. In der Mittelstellung des Werkstückspindelschlittens kann mit feststehenden Werkzeugen beider Werkzeugträger am Außenumfang eines im Spannfutter der Werkstückspindel gehaltenen Werkstücks gleichzeitig vierachsig gearbeitet werden.

Auf der zur ersten Werkstückspindel in Bezug zum Werkzeugträger gegenüberliegenden Seite kann je eine weitere Werkstückspindel angeordnet werden. Wird ein schaltbarer Werkzeugträger verwandt, so kann sogar mit denselben Werkzeugen auf von diesen zusätzlichen Werkstückspindeln gehaltenen Werkstücken gearbeitet werden. Die Trennung von Maschinenständer und Schlittenkonsol in unabhängige Baueinheiten erlaubt die beliebige Kombination dieser Baugruppen. Sie können leicht auf einem Untersatz zueinander justiert werden.

Die einzelnen Baugruppen lassen sich nun zu einem Fertigungssystem mit bis zu vier Werkstückspindeln und vier Werkzeugträgern kombinieren, was ebenfalls nur durch die vorgeschlagene Anordnung der Querführungsbahnen möglich wird. Die Werkstückspindeln werden dabei in den dem Maschinenständer diagonal gegenüberliegenden Quadranten angeordnet, die sich durch die gedachte Verlängerung der vertikalen Maschinenständerflächen ergeben.

Auf den Planschlitten können Werkzeuge derart angeordnet werden, daß einige für die Bearbeitung eines Werkstücks in einer ersten Werkstückspindel und andere für die Bearbeitung eines Werkstücks in einer in Bezug zum Planschlitten gegenüberliegenden Spindel eingesetzt werden können. Die Werkstückspindel an der gerade keine Bearbeitung stattfindet, kann dann beladen werden. Selbst bei vier Werkstückspindeln kann an jeder mit den zwei benachbarten Planschlitten gearbeitet werden. Wenn als Werkzeugträger Revolver verwendet werden, können dieselben Werkzeuge in der um 180° versetzten Schaltstellung des Werkzeugrevolvers an der jeweils anderen Werkstückspindel eingesetzt werden.

Die Erfindung wird anhand der nachstehenden Zeichnungen näher erläutert. Es zeigen

Fig. 1 einen Horizontalschnitt durch eine einspindlige Vertikaldrehmaschine

Fig. 2 eine Werkstückspindeleinheit

Fig. 3 eine Draufsicht einer vierspindligen Vertikaldrehmaschine teilweise im Schnitt

Fig. 4 eine Seitenansicht teilweise im Schnitt.

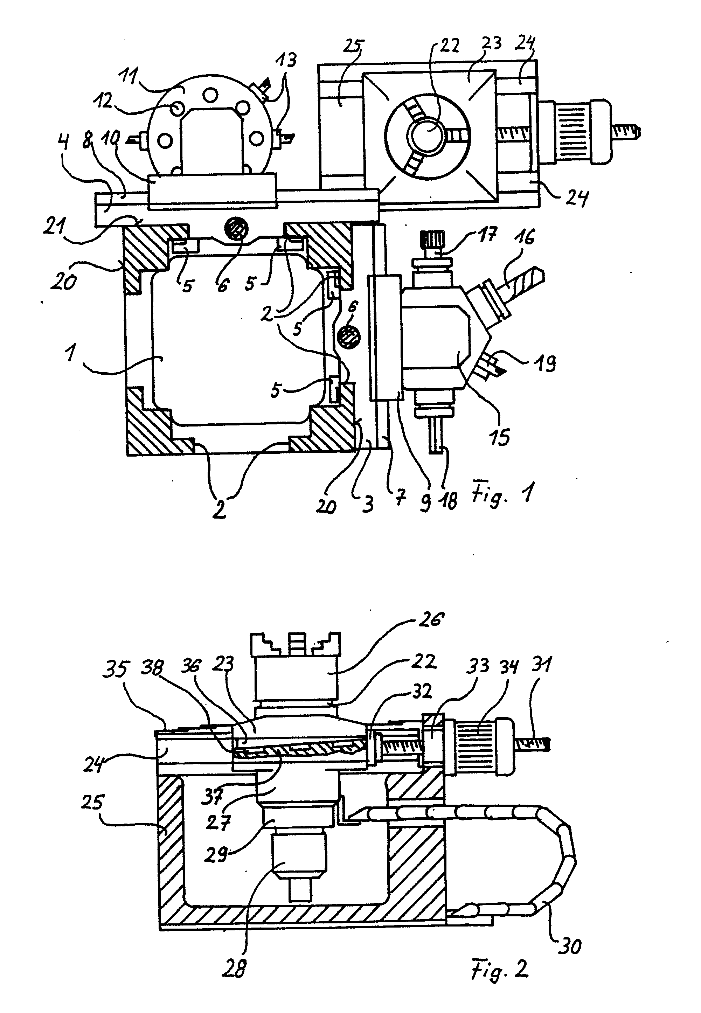

Fig. 1 zeigt eine einspindlige Ausführung einer Vertikaldrehmaschine in der Draufsicht. Der Maschinenständer 1, der auf einem nicht dargestellen Untersatz befestigt ist, besitzt an allen vier Vertikalflächen je zwei Längsführungen 2. Die Längsführungen 2 an zwei benachbarten Flächen tragen Längsschlitten 3, 4, die mit Untergriffleisten 5 an den Längsführungen 2 gehalten werden. Die Längsschlitten 3, 4 werden durch Gewindespindeln 6 auf und ab bewegt. Beide Längsschlitten 3, 4 tragen über ihre gesamte Breite Querführungen 7, 8, auf denen Planschlitten 9, 10 verschieblich gehalten werden. Auf dem einen Planschlitten 10 ist ein Trommelrevolver 11 befestigt, der Werkzeugaufnahmen 12 für Bohrstangen 14 und Drehmeißel, 13 aufweist. Der zweite Planschlitten 9 trägt einen Sternrevolver 15 mit rotierend angetriebenen Werkzeugen, wie z.B. Spiralbohrer 16, Stirnfräser 17 und Einlippenbohrer 18. Er kann auch Drehwerkzeuge 19 für Plan- und Langdrehbearbeitung aufnehmen.

Die Verlängerungen der belegten Vertikalflächen 20, 21 des Maschinenständers 1 bilden in der Draufsicht ein Achsenkreuz mit vier Quadranten, von denen einer durch den Maschinenständer 1, zwei weitere durch je einen Werkzeugträger 11, 15 und der letzte durch die Werkstückspindel 22 belegt ist. Durch die Anordnung der Baugruppen im wesentlichen jeweils in eigenen Quadranten ergeben sich erfindungsgemäß die kollisionsfreien, günstigen Bearbeitungsbedingungen und die Erweiterbarkeit der Drehmaschine. Die Werkstückspindel 22 ist in einem Werkstückspindelschlitten 23 gelagert, der auf Führungsbahnen 24 einer Konsole 25 verschieblich ist.

Die Anordnung der Werkstückspindel 22 auf der Konsole 25 ist in Fig. 2 genauer dargestellt. Die Werkstückspindel 22 trägt ein Spannfutter 26 und ist von einem Spindelmotor 27 umgeben. An die Werkstückspindel 22 ist ein Spannzylinder 28 zur Betätigung des Spannfutters 26 angeflanscht. In den Spindelmotor 27 kann ein Hohlwellengeber 29 zur Steuerung des Spindelmotors 27 integriert sein. Der Spindelmotor 27 ist über eine Kabelführung 30 so mit einer Stromquelle verbunden, daß er sich in Führungsbahnenrichtung frei bewegen kann. Die Verschiebung des Werkstückspindelschlittens 23 und damit der Werkstückspindel 22 bewirkt eine Gewindespindel 31, die mit einer Druckhülse 32 am Werkstückspindelschlitten 23 undrehbar befestigt ist. Die Gewindespindel 31 steht mit einer Spindelmutter 33 in Eingriff, die von einem Vorschubmotor 34 angetrieben wird. Die Spindelmutter 33 kann an den Rotor des Vorschubmotors 34 angeflanscht sein, wobei dann die Gewindespindel 31 den Vorschubmotor 34 durchdringt. Auf diese Weise ist ein zentrischer Kraftangriff der Gewindespindel 31 am Werkstückspindelschlitten 23 ohne zusätzliche Getriebeglieder möglich. Die Führungsbahnen 24 für den Werkstückspindelschlitten 23 auf der Konsole 25 sind durch Teleskopbleche 35 abgedeckt. Der Werkstückspindelschlitten 23 ist durch Keilleisten 36 justierbar. Die Gegenleiste 37 ist mit mehreren hydraulisch betätigten Kolben 38 versehen, die den Schlitten in jeder beliebigen Vorschubposition auf den Führungsbahnen 24 klemmen.

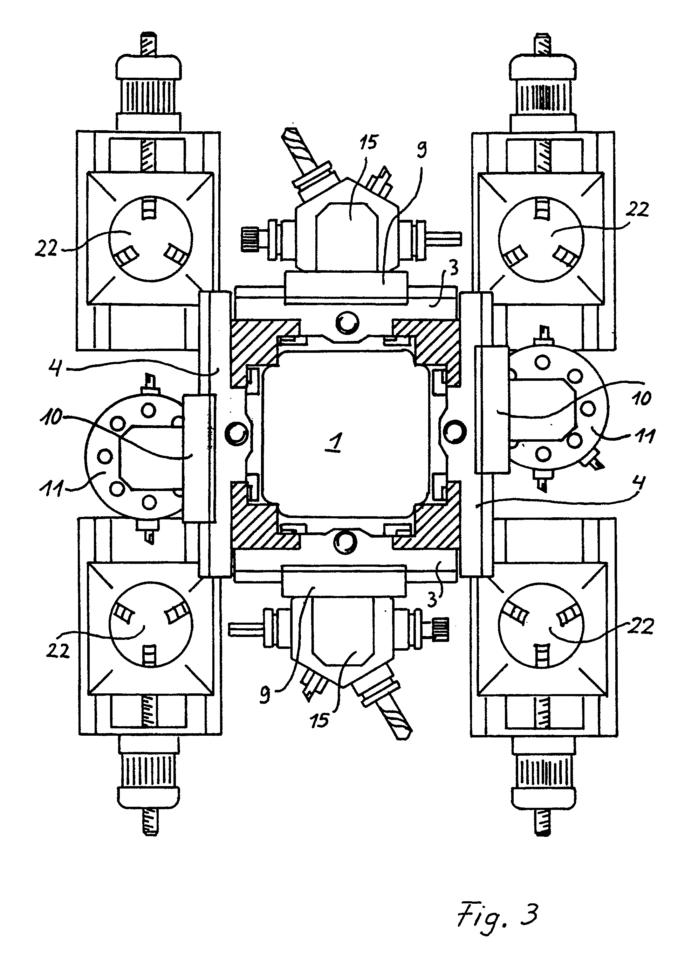

Fig. 3 zeigt die höchste Ausbaustufe der Vertikaldrehmaschine mit vier Werkstückspindeln 22. Je zwei Werkstückspindeln 22 sind symmetrisch zueinander angeordnet. An dem quadratischen Maschinenständer 1 sind auf gegenüberliegenden Stirnseiten zwei Kreuzschlitten 4, 10 für Trommelrevolver 11 und zwei Kreuzschlitten 3, 9 für Sternrevolver 15 geführt. Alle Werkstückspindeln 22 sind quer zu den Vorschubrichtungen der Kreuzschlitten 3, 9 für die Sternrevolver 15 und in Richtung des Planvorschubs der Kreuzschlitten 4, 10 der Trommelrevolver 11 verschieblich. Die Trommelrevolver 11 tragen dabei vorzugsweise die Axialbearbeitungswerkzeuge und die Langdrehmeißel, während die Sternrevolver 15 die Radialwerkzeuge und die Einstechdrehmeiße, halten. Selbstverständlich können die Werkzeuge z.B. als Linearwerkzeugträger auch direkt auf den jeweiligen Planschlitten befestigt sein.

Die Werkzeuge jedes Werkzeugträgers können gleichzeitig mit einer der Werkstückspindeln zusammenarbeiten, wobei dann an allen vier Spindeln gleichzeitig zerspant wird. Es können aber auch zwei Werkzeugträger gemeinsam auf ein Werkstück einer Werkstückspindel einwirken, wobei dann zwei Werkstückspindeln zum Be- und Entladen frei sind.

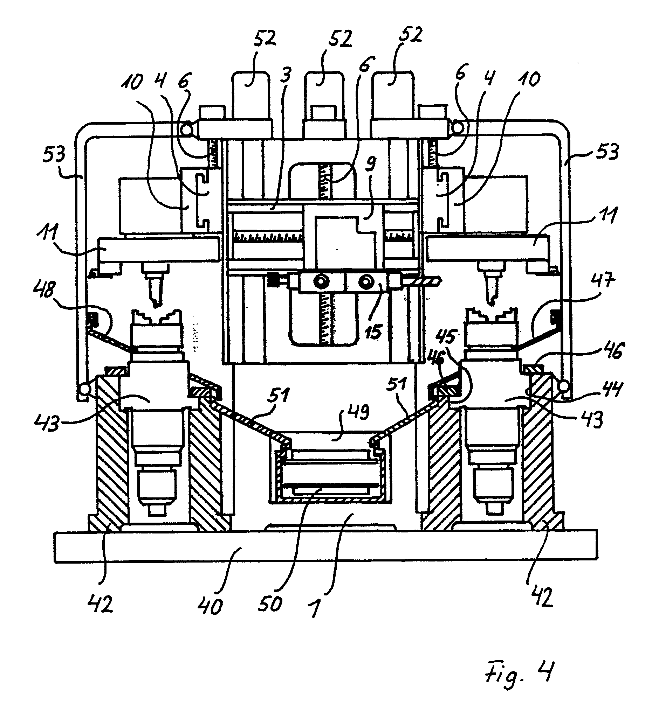

Fig. 4 zeigt in einer Stirnansicht die Anordnung der Einheiten auf einem Untersatz 40. Neben dem Maschinenständer 1 sind zwei Konsole 42 mit dem Untersatz 40 verschraubt. Die Werkstückspindelschlitten 43 haben unterschiedlich hohe Führungsstege 44, 45, die durch Führungsleisten 46 in den Gegenführungen der Konsole 42 gehalten werden. Dadurch ergibt sich für die Führungsbahnabdeckungen 47, 48 eine Neigung zum Maschinenständer 1 hin. Der Maschinenständer 1 besitzt einen Durchbruch 49, in den ein Späneförderer 50 eingeschoben ist. Der Zwischenraum zwischen dem Späneförderer 50 und den Führungsbahnabdeckungen 47, 48 wird durch Späneleitbleche 51 geschlossen. Damit können die an allen Werkzeugspindeln 22 erzeugten Späne einem einzigen, sich in Längsachse der

Vertikaldrehmaschine erstreckenden Späneförderer 50 zugeführt werden.

An dem Maschinenständer 1 sind die beiden Trommelrevolver 11 mit ihren Längs- und Planschlitten 4, 10 und der Sternrevolver 15 auf seinem Längs- und Planschlitten 3, 9 erkennbar. Die Längsschlitten 3, 4 werden durch Gewindespindeln 6 verschoben, die von Vorschubmotoren 52 angetrieben werden. Der Arbeitsraum ist durch eine Arbeitsraumabdeckung 53 gegen die Umgebung abgedichtet.

**Ansprüche**

1. Drehmaschine mit vertikal angeordneter Werkstückspindel (22) zur drehbaren Halterung eines zu bearbeitenden Werkstücks, mit einem vertikal sich erstreckenden Maschinenständer (1) etwa quadratischen Querschnitts und mit an mindestens zwei benachbarten Vertikalflächen (20, 21) des Maschinenständers (1) angeordneten, vertikalen Längsführungen (2) für mindestens zwei Längsschlitten (3, 4), die ihrerseits horizontale Querführungen (7, 8) für Planschlitten (9, 10) tragen, wobei der eine Schlitten (9) vorzugsweise rotierend angetriebene, radiale Werkzeuge (16, 17, 18) trägt dadurch gekennzeichnet, daß die Querführungen (7, 8) für die Planschlitten (9, 10) in einem rechten Winkel zueinander stehen und daß die Werkstückspindel (22) quer zu den Längs - und Querführungen (2, 7) einer der Längs-und Planschlitten (3, 9) verschiebbar ist.
2. Drehmaschine nach Anspruch 1 dadurch gekennzeichnet, daß die Werkstückspindel (22) auf einem Werkstückspindelschlitten (23) angeordnet ist, der auf einem Konsol (25, 42) mit Führungsbahnen (24) verschieblich geführt ist.
3. Drehmaschine nach Anspruch 2 dadurch gekennzeichnet, daß das Konsol (25, 42) getrennt vom Maschinenständer (1) aufstellbar ist.
4. Drehmaschine nach Anspruch 2 dadurch gekennzeichnet, daß das Konsol (25, 42) für den Werkstückspindelschlitten (23) und der Maschinenständer (1) auf einem Untersatz (40) angeordnet ist.
5. Drehmaschine nach Anspruch 1 dadurch gekennzeichnet, daß die Werkstückspindel (22) in beliebigen Positionen ihrer Querverschiebung gegenüber dem Konsol (25, 42) klemmbar ist.
6. Drehmaschine nach Anspruch 1 dadurch gekennzeichnet, daß an einer weiteren Vertikalfläche des Maschinenständers (1) vertikale Längsführungen (2) für einen weiteren Längsschlitten (3, 4) angeordnet sind, der seinerseits auf vertikalen Flächen Querführungen (7, 8) für Planschlitten (9, 10) trägt, daß die Querführungen (7, 8) für die Planschlitten (9, 10) im rechten Winkel zu benachbarten Planschlittenführungen stehen und daß eine weitere Werkstückspindel (22) quer zu den Führungsbahnen (2, 7, 8) mindestens einer der Längs- und Planschlitten (3, 9) verschiebbar ist.
7. Vertikaldrehmaschine nach Anspruch 1 dadurch gekennzeichnet, daß an jeder Vertikalfläche (20, 21) des Maschinenständers (1) vertikale Längsführungen (2) für Längsschlitten (3, 4) angeordnet sind, daß jeder Längsschlitten (3, 4) horizontale Querführungen (7, 8) für Planschlitten (9, 10) trägt, wobei die Planschlitten (9, 10) Werkzeuge tragen und zwei gegenüberliegende Planschlitten (9) vorzugsweise rotierend angetriebene, radiale Werkzeuge (16, 17, 18) tragen und daß im Bereich jeder durch die Vertikalflächen (20, 21) gebildeten Vertikalkante (41) des Maschinenständers (1) eine Werkstückspindel (22) angeordnet ist, die quer zu den Führungen (2, 7) einer der Längs- und Planschlitten (3, 9) verschiebbar ist.
8. Drehmaschine nach Anspruch 7 dadurch gekennzeichnet, daß jede Querführung (7, 8) für Planschlitten (9, 10) die gesamte Breite der Vertikalfläche (20, 21) des Maschinenständers (1), an der er angeordnet ist, überdeckt und die Planschlitten (9, 10) von einer Vertikalkante (41) des Maschinenständers (1) zur gegenüberliegenden verfahrbar sind, derart, daß seine Werkzeuge an jeweils zwei Werkstückspindeln (22) einsetzbar sind.
9. Drehmaschine nach Anspruch 2 dadurch gekennzeichnet, daß die Abdeckung der Führungsbahnen (24) des Werkstückspindelschlittens (23, 43) gegen den Maschinenständer (1) geneigt sind und daß ein Späneförderer (50) den Maschinenständer (1) unterquert.
10. Drehmaschine nach Anspruch 1 dadurch gekennzeichnet, daß sowohl die rotierend angetriebenen Werkzeuge (16, 17, 18) als auch die feststehenden Drehwerkzeuge (13, 19) in einem schaltbaren Werkzeugträger (11, 15) angeordnet sind.

Fig. 1

Fig. 2

Fig. 3

Fig. 4